# EUROPÄISCHE PATENTSCHRIFT

(11) **EP 2 418 381 B1**
(45) Veröffentlichungstag und Bekanntmachung des Hinweises auf die Patenterteilung: **16.07.2014**
(21) Anmeldenummer: 11006560.4
(22) Anmeldetag: 10.08.2011
(51) Int. Cl.: F04B 17/02, F03D 9/00, F03C 1/32, F03D 11/02, F04B 1/14, F03D 11/00, F03C 1/06

(54) **Windkraftwerk mit hydrostatischem Hauptantrieb mit verstellbarer hydraulischer Axialkolbenkraftmaschine und Verfahren zur Steuerung**
Wind power plant with hydrostatic main drive with adjustable hydraulic axial piston engine and method for control
Eolienne avec un entraînement principal hydrostatique doté d'un moteur à piston axial hydraulique réglable et procédé de commande

(30) Priorität: 12.08.2010 DE 102010034188
(43) Veröffentlichungstag der Anmeldung: 15.02.2012
(73) Patentinhaber: MPP GBR, 17036 Neubrandenburg (DE)
(72) Erfinder: Meuser, Peter, 17034 Neubrandenburg (DE)
(74) Vertreter: Voss, Karl-Heinz

(56) Entgegenhaltungen:
- EP-A1- 2 050 957
- EP-A2- 2 151 574
- EP-A2- 2 154 368
- DE-A1- 1 403 757
- DE-U1-202009 009 696

## Beschreibung

Die Erfindung betrifft eine hydraulische Axialkolbenkraftmaschine für mittlere und große Leistungen für den Einsatz insbesondere in Windkraftwerken mit einem hydrostatischen Hauptantrieb. Windkraftwerke (WKW) sind Anlagen zur Gewinnung von Strom und Wärme aus Windenergie mit echten Kraftwerkseigenschaften, auch als Typ-1-Anlagen bezeichnet. Sie sind gleichermaßen sowohl für den Netzparallelbetrieb als auch für den autarken Inselbetrieb einsetzbar. Durch ihren Einsatz können konventionelle Kraftwerke vollwertig ersetzt werden.

Im Gegensatz dazu sind Windenergieanlagen (WEA), auch als Windkraftanlagen (WKA) oder Windturbinen (WT) bezeichnet, Anlagen zur Gewinnung von Strom aus Wind ohne Kraftwerkseigenschaften. Sie sind ausschließlich für den Netzparallelbetrieb einsetzbar und können konventionelle Kraftwerke grundsätzlich nicht ersetzen.

Die Drehung eines zwei- oder auch mehrblättrigen Rotors eines Windkraftwerkes mit hydrostatischem Hauptantrieb unter der Einwirkung der ihn senkrecht und laminar anströmenden Luftmasse, wird hier über ein hydrostatisches System, bestehend aus mehreren Kraftmaschinen, die als hydraulische Pumpe und hydraulische Motoren wirken, bestimmungsgemäß geregelt, auf einen oder mehrere direkt netzgekoppelte Induktions- Synchrongeneratoren übertragen.

### Stand der Technik

Bekannt sind hydrostatische Kolbenkraftmaschinen mittlerer und großer Leistungen in geschlossener Bauweise, wobei die einzelnen Zylinder in axialer oder radialer Anordnung kreisringförmig zu einer Antriebswelle von einem kompakten Gehäuse umschlossen werden, bzw. in einem Zylinderblock angeordnet sind.

Nachteilig ist dabei u.a., dass die von der Kolbenkraftmaschine zu verarbeitende Volumenströme durch dieses Gehäuse/den Zylinderblock geführt werden müssen, wobei wegen des begrenzt zur Verfügung stehenden Raumes die Durchmesser der ölführenden Kanäle begrenzt sind. Dieses und andere Nachteile führen dazu, dass auch die Baugröße der "geschlossenen" hydrostatischen Kolbenkraftmaschinen nicht oder nur bedingt über ein bestimmtes Maß hinaus vergrößert werden kann. Die größte weltweit verfügbare Kolbenkraftmaschine für hydrostatische Antriebe in drehzahlgeregelten Windkraftwerken ohne Pitch ist deshalb auf gegenwärtig maximal 600 kW begrenzt.

Für die verhältnismäßig langsam drehende, direkt mit dem Rotor verbundene Hydropumpe im hydrostatischen Hauptantrieb mittlerer und großer Windkraftwerke können bisher ausschließlich Radialkolbenpumpen verwendet werden. Diese zeichnen sich vor allem durch sehr hohe Volumenströme bei geringen Drehzahlen, hohe Drehmomente und damit große Leistungen aus. Die Auswahl der Hydropumpe für das jeweilige Windkraftwerk kann bei gegebener Leistung nicht willkürlich gewählt werden, sondern die ausgewählte Pumpe muss im Interesse eines möglichst guten Wirkungsgrades im gesamten Betriebsbereich hinsichtlich ihres Drehzahl/ Drehmomentverhältnisses möglichst genau der Drehzahl-Drehmoment- Kennlinie des Rotors entsprechen.

Derzeit verfügbare Radialkolbenpumpen der genannten Größenordnungen sind hinsichtlich ihres Schluckvolumens nicht verstellbar. Sie realisieren zwar sehr gute Gesamtwirkungsgrade im ganzen Betriebsbereich, können aber nicht auf das von verstellbaren Hydromotoren im hydrostatischen Antrieb bei konstanter Drehzahl benötigte Schluckvolumen angepasst werden. Das führt dazu, dass die Hydromotoren bei geringen Drehzahlen der Hydropumpe und damit geringer Antriebsleistung in einem sehr ungünstigen Wirkungsgradbereich arbeiten, weil bei gegebenem Volumenstrom und gegebener Leistung der Systemdruck zu gering ist. Eine mögliche Reduzierung des Volumenstroms der Pumpe bei gleichzeitiger Erhöhung des Systemdrucks würde deutlich bessere Wirkungsgrade der Hydromotoren, des hydrostatischen Antriebes und damit letztlich des WKW ermöglichen.

In der EP 2 154 368 A2 ist eine Windenergieanlage mit einer hydraulischen Maschine mit nichtsymmetrischer Kraftübertragung vorgeschlagen worden. Die hydraulische Maschine (Pumpe) besitzt eine radiale Kolbenanordnung, wobei die Kurvenscheibe (cam) außerhalb oder innerhalb der ringförmig im Gehäuse angeordneten Zylinder angebracht werden kann. Durch diese Anordnung addiert sich die Höhe der Zylinder mit Zylinderköpfen, die Höhe der Kurvenscheibe und die Dicke des Zylindergehäuses zu einem großen Durchmesser. Weiterhin sind die Zylinder offensichtlich durch radiale Bohrungen in einem massiven, ringförmigen Zylindergehäuse geschaffen. Bei einer größeren Anzahl von Zylindereinheiten besitzt die hydraulische Maschine dadurch ein großes Gewicht und einen großen Durchmesser. Das letztere wirkt sich auch ungünstig auf die Windströmung im Bereich des Rotors und der Gondel aus. Jede Baugröße benötigt, wie bekannt, außerdem einen unterschiedlich großes ringförmiges Zylindergehäuse.

In dieser Patentanmeldung wird auch vorgeschlagen, die hydraulische Maschine von der Funktion als Pumpe in die eines hydraulischen Motors umzusteuern. Damit kann der Rotor aus dem Stillstand bis zu einer Drehzahl beschleunigt werden, in der dieser vom anströmenden Wind angetrieben werden kann. Einzelheiten dazu sind nicht offenbart.

Das betrifft auch den Vorschlag, die Umsteuerung zu nutzen, um den Rotor zu bremsen. Es muss deshalb davon ausgegangen werden, dass die Bremsung wie üblich mittels eines Drosselventils im Hauptölkreislauf erfolgen soll. Mit dieser Ausführung kann bei einer Vielzahl von Hydraulikzylindern nur eine Abbremsung, aber kein sicherer Stillstand des Rotors erzielt werden.

Es sind auch hydrostatische Axialkolbenpumpen in verschiedenen Bauarten bekannt. In einer Bauform mit feststehendem Gehäuse, bzw. Zylinderblock besitzen die Kolben am unteren Ende eine Gleitfläche oder ein Lager, die/das sich auf eine Schrägscheibe oder Kurvenscheibe abstützt. Diese Bauform ist z. B. in der DE 102005 058 323 A1, DE 102007 022 022 A1, DE 102007 049 393 A1, und in dem EP 0733 167 B1 beschrieben.
Die Steuerung der Leistung kann durch eine Änderung des Hubweges der Kolben z. B. über die Änderung der Neigung der Schrägscheibe erfolgen. Diese Bauform ist wegen mehrerer technischer Probleme nicht für große Leistungen geeignet.

Für die weitere Entwicklung leistungsstarker WKW mit hydrostatischem Antrieb bis weit hinein in den Megawattbereich werden größere hydraulische Verdrängerkraftmaschinen mit zumindest stufenweise verstellbarem Schluckvolumen benötigt, als sie derzeit generell verfügbar sind.

### Aufgabe der Erfindung

Aufgabe der Erfindung ist es deshalb, eine verstellbare hydraulische Kolbenkraftmaschine für verschiedene Leistungsgrößen im hohen Leistungsbereich zu schaffen, die sowohl als langsam laufende Hydropumpe als auch als langsam laufender Hydromotor einsetzbar ist. Leistung und Schluckvolumen sollen dabei im weiten Bereich steuerbar sein. Eine weitere Aufgabe ist die Verringerung des spezifischen Gewichtes und eine hohe Lebensdauer der beweglichen Elemente der hydraulischen Kolbenkraftmaschine.

Gelöst wird diese Aufgabe durch die Merkmale des Anspruchs 1. Mehrere Zylinder-Kolbeneinheiten 01 sind als jeweils eigenständige Baugruppe in entsprechende Bohrungen einer kreisringförmigen Zylinderaufnahme 02 lösbar befestigt. Diese Konstruktion mit der mehrfach verwendeten Baugruppe ermöglicht eine variable Leistungsgröße, je nach Durchmesser der Zylinderaufnahme 02 und Anzahl der Zylinder-Kolbeneinheiten 01. Durch die Variation von Hubzahl und Hubhöhe der Kurvenscheibe 04 ist zusätzlich eine Feinanpassung des spezifischen Schluckvolumens an die Eigenschaften des Rotors des WKW, bzw. Antriebes möglich.

Mit der direkten Verbindung der Zylinderaufnahme 02 mit dem feststehenden Teil 03, z. B. eines Rotorlagers eines WKW, ist kein zusätzliches Gehäuse oder zusätzlicher Rahmen erforderlich.
Jede Zylinder-Kolbeneinheit 01 ist weiterhin über je eine Leitung sowohl mit der Hoch- als auch der Niederdruckseite des geschlossenen Kreislaufes des hydrostatischen Antriebs verbunden. Damit sind keine aufwendigen und im Querschnitt begrenzten Strömungskanäle in der Zylinderaufnahme erforderlich. Durch sperrbare Rückschlagventile in den Verbindungen jeder Zylinder-Kolbeneinheit 01 zu den geschlossenen Kreisläufen des hydrostatischen Antriebs und über eine Steuereinheit kann bei gegebener Anzahl von Zylinder-Kolbeneinheiten 01 die stufenweise Verstellung des spezifischen Schluckvolumens, auch im Motorbetrieb, realisiert werden, in dem einzelne von diesen unabhängig voneinander zu- bzw. abschaltbar sind.

Gemäß einer bevorzugten Ausführung nach Anspruch 2 ist in einem WKW die Zylinderaufnahme 02 mit dem feststehenden Teil 03 eines Rotorlagers eines WKW oder Rahmenelementes und die Kurvenscheibe 04 mit dem Innenlaufkranz 06 der Windturbine fest verbunden.
Dieses ermöglicht eine Bauweise ohne zentrale Welle und radiale Stützen für die Zylinderaufnahme 02, was eine erhebliche Vereinfachung und Gewichtseinsparung bewirken.

Gemäß einer bevorzugten Ausführung nach Anspruch 3 ist das untere äußere Ende der Zylinder 07 als Passsitz zu den Bohrungen der Zylinderaufnahme 02 und darüber ein Außengewinde kompatibel zum Innengewinde der Zylinderaufnahme 02 ausgeführt. Eine Sicherungsmutter 08 auf dem Zylindergewinde sichert die axiale und radiale Lage. Diese Lösung ermöglicht eine einfache Montage und Demontage, wobei die Anschlüsse im Zylinderkopf 09 und die Lagerelemente für den Kolben 10 zur Kurvenscheibe 04 exakt ausgerichtet werden können.

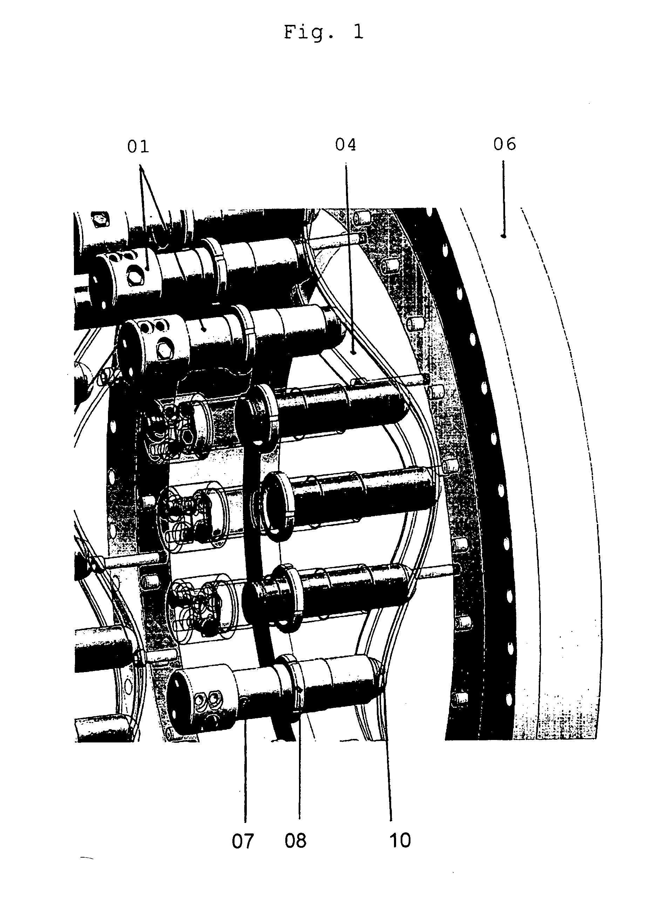

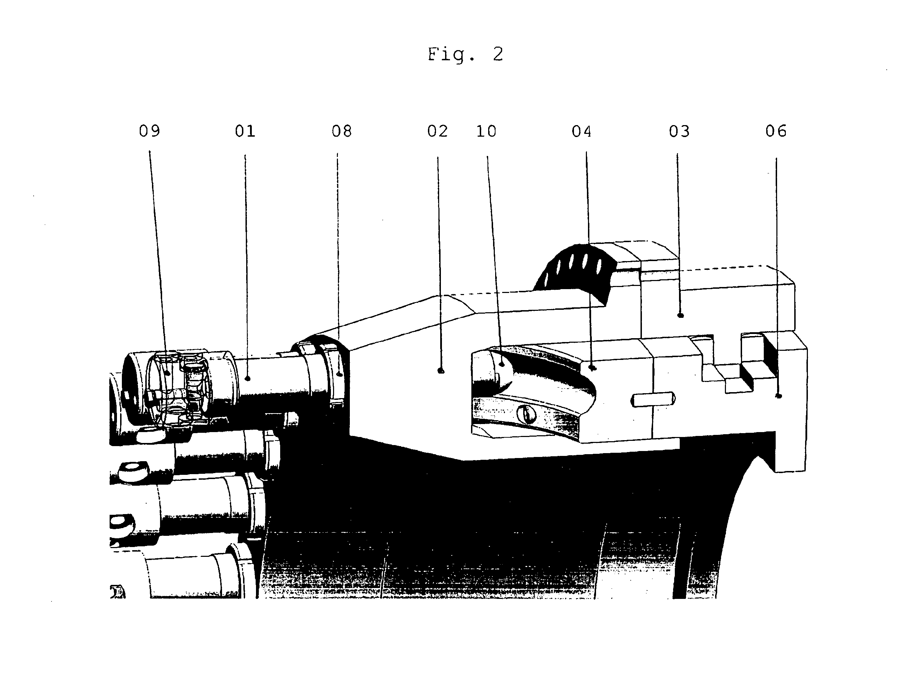

In den Ansprüchen 4 und 5 sind günstige Ausführungen zur Realisierung der Abschaltung einzelner Zylinder-Kolbeneinheiten 01 enthalten, wie im Ausführungsbeispiel beschrieben.
Weitere bevorzugte bauliche Ausgestaltungen zur Zylinderaufnahme 02 gemäß den Figuren 1 und 2 sind in den Unteransprüchen 6 und 7 beansprucht.

Anspruch 8 definiert ein Verfahren zur Steuerung eines Windkraftwerkes mit hydrostatischem Hauptantrieb mit verstellbarer hydraulischer Axialkolbenkraftmaschine nach Anspruch 1.

Weitere günstige Ausgestaltungen zum Steuerverfahren für das Anlaufen und als Haltebremse des Rotors sind im Unteranspruch 09 dargelegt.

### Beispiele

Nachfolgend soll die Erfindung an einem Ausführungsbeispiel mit einem hydrostatischen Hauptantrieb im WKW näher erläutert werden.
Figur 1 zeigt eine räumliche Abbildung eines Bereiches der freigelegten Zylinder/Kolbeneinheiten 01 auf der Kurvenscheibe 04,
Figur 2 zeigt eine räumliche Abbildung mit dem Querschnitt der Zylinderaufnahme 02, die mit dem feststehenden Teil 03 des Rotorlagers verbunden ist,
Fig. 3 zeigt den Querschnitt eines Zylinders mit Zylinderkopf und

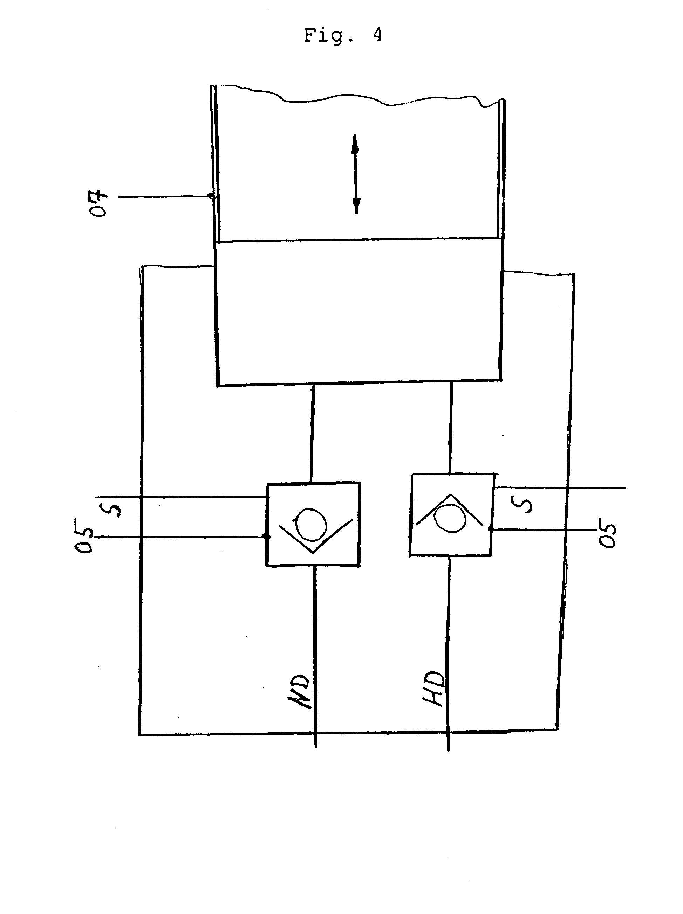

Fig. 4 zeigt eine Schaltung der Hydraulikanschlüsse einer Zylinder/Kolbeneinheiten 01

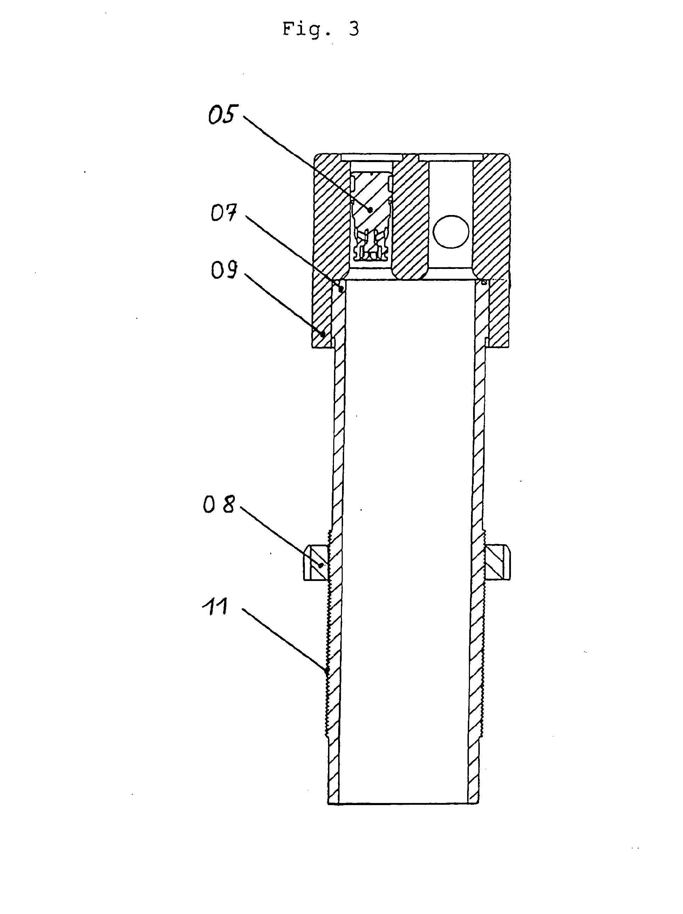

Die Axialkolbenkraftmaschine gemäß der Erfindung besteht aus mehreren identischen Zylinder/Kolbeneinheiten 01, die in axialen Durchgangsbohrungen einer kreisringförmigen Zylinderaufnahme 02 befestigt sind.
Die Zylinder/Kolbeneinheit 01 gemäß Fig. 3 besteht aus einem Zylinder 07 aus hochwertigem Material. Die Innenseite ist für den Kolben und die untere Außenwand ist für die Durchgangsbohrung als Passung ausgeführt. Oberhalb der unteren Außenwand ist im mittleren Bereich des Zylinders 07 ein Feingewinde aufgebracht. Am oberen Ende ist ein Zylinderkopf 09 befestigt. In zwei Durchgangsbohrungen in diesem ist je ein Rückschlagventil 05 mit Steuerelementen zur Sperrung, bzw. Entsperrung eingebracht. Die Durchgangsbohrungen besitzen außerdem ein Innengewinde für die Leitungsanschlüsse für die Niederdruck- und Hochdruckleitung.

Die Zylinderaufnahme 02 besteht aus einem massiven kreisringförmigen Stahlkörper. Der mittlere Durchmesser entspricht dem Durchmesser des sich drehenden Innenlaufkranzes 06 des Rotorlagers des WKW und beträgt je nach Leistung des WKW bis zu mehreren 1000 mm. In einer Stirnseite der Zylinderaufnahme 02 ist eine große, breite Nut eingebracht. Diese nimmt die Kurvenscheibe 04, auch als Laufbahn mit Hubkurve bezeichnet, und die darauf geführten Lagerelemente für die Kolben 10 auf. Die Durchgangsbohrungen ragen von der anderen Stirnseite bis in die Nut. Im oberen Abschnitt ist ein Feingewinde, entsprechend dem am Zylinder 07 und darunter eine entsprechende Passung eingearbeitet.

Die Zylinder/Kolbeneinheiten 01 sind in die Bohrungen der Zylinderaufnahme 02 so weit eingeschraubt, bis die als Lagerelement für den Kolben 10 dienende Kugel in die Laufbahn der Kurvenscheibe 04 spielarm eingreift. Unter Berücksichtigung der Lage der Anschlüsse am Zylinderkopf 09 ist diese Stellung durch Aufschrauben der Sicherungsmutter 08 auf den Zylinder 07 gesichert.

Die Zylinderaufnahme 02 ist mittels Flansch am feststehenden Teil des Rotorlagers des WKW und die Kurvenscheibe 04 am Innenlaufkranz, also dem drehenden Teil des Rotorlagers, angeschraubt. Die Kurvenscheibe 04 wird durch die Lagerung des Innenlaufkranzes mitgeführt, so dass ständig ein Freiraum zur Innenwandung der Nut verbleibt. Der gesamte Freiraum wird mit Spülöl zur Schmierung und Kühlung der Lagerungen durchströmt.

Der große Durchmesser der Zylinderaufnahme 02 ermöglicht die Anordnung einer Vielzahl von Zylinder/Kolbeneinheiten 01. Es kann somit eine große Leistung erbracht und andererseits der spezifische Lagerdruck auf der Kurvenscheibe 04 klein gehalten werden.
Eine zentrale Welle mit eigener Lagerung und Stege zur Befestigung der Zylinderaufnahme 02 können in dieser Ausführung entfallen.

Durch eine nicht dargestellte Steuereinheit können alle Rückschlagventile 05 angesteuert und ge- bzw. entsperrt werden. Sinkt die Leistung der Windturbine wird die erforderliche Anzahl der Zylinder/Kolbeneinheiten 01 abgeschaltet, in dem das Rückschlagventil 05 der Niederdruckseite, also der Ölzufluss, gesperrt wird. Das Schluckvolumen insgesamt sinkt, aber der Arbeitsdruck kann im günstigen Bereich gehalten werden. Dadurch arbeitet das hydrostatische System insgesamt weiter mit optimalem Wirkungsgrad.

Durch eine Umsteuerung von Niederdruck- und Hochdruckfluss zu den Zylinder/Kolbeneinheiten 01 kann die hydraulische Axialkolbenkraftmaschine einfach auf die Funktion als Motor umgestellt werden. In dieser Funktion kann der Rotor aus dem Stillstand bis zur erforderlichen Mindestdrehzahl anlaufen. Ein besonderer Antrieb hierfür kann entfallen.
Als weitere Funktion kann die erfindungsgemäße Axialkolbenkraftmaschine als Haltebremse für den Rotor dienen. Hierzu werden durch die Steuerung alle Zylinder/Kolbeneinheiten 01 gleichzeitig mit Druck beaufschlagt.

### Verzeichnis der Bezugszeichen

- 01: Zylinder/Kolbeneinheit
- 02: Zylinderaufnahme
- 03: feststehendes Teil
- 04: Kurvenscheibe
- 05: Rückschlagventil
- 06: Innenlaufkranz
- 07: Zylinder
- 08: Sicherungsmutter
- 09: Zylinderkopf
- 10: Lagerelement für Kolben
- 11: Außengewinde

## Patentansprüche

1. Windkraftwerk (WKW) mit hydrostatischem Hauptantrieb, mit verstellbarer hydraulischer Axialkolbenkraftmaschine, bestehend aus mehreren ringförmig, feststehend angeordneten Zylindern (07) mit darin geführten Kolben, wobei die Kolben über Lagerelemente auf einer ringförmigen Kurvenscheibe (04) mit Hubkurven abgestützt sind, durch deren Rotation ein Hub der Kolben, bzw. durch eine hydraulische Beaufschlagung der Kolben eine Rotation der Kurvenscheibe (04) bewirkt wird, wobei diese mit einem Antrieb bzw. Abtrieb verbunden ist, **dadurch gekennzeichnet,**
- **dass** mehrere Zylinder/Kolbeneinheiten (01) als jeweils eigenständige Baugruppe in entsprechende Bohrungen einer kreisringförmigen Zylinderaufnahme (02) lösbar befestigt sind und die Zylinderaufnahme (02) mit dem feststehenden Teil (03) eines Rotorlagers des WKW oder Rahmenelementes fest verbunden ist,
- die jeweils erforderliche Leistung und das Schluckvolumen durch die Anzahl der immer gleichen Zylinder/Kolbeneinheiten (01) bestimmt sind und durch die Variation von Hubzahl und Hubhöhe der Kurvenscheibe (04) eine Feinanpassung des spezifischen Schluckvolumens an die Eigenschaften des Rotors des WKW bzw. Antriebes erfolgt,
- bei gegebener Anzahl von Zylinder/Kolbeneinheiten (01) eine stufenweise Verstellung des spezifischen Schluckvolumens dadurch realisiert wird, dass einzelne davon unabhängig voneinander zu- bzw. abschaltbar sind, indem in den Verbindungen jeder Zylinder/Kolbeneinheit (01) sowohl zur Hoch- als auch zur Niederdruckseite des geschlossenen Kreislaufes des hydrostatischen Antriebs je ein sperrbares Rückschlagventil angeordnet ist, die darüber hinaus gemeinsam auch den Motorbetrieb der Axialkolbenkraftmaschine dadurch sichern, dass sie über eine Steuereinheit entsprechend angesteuert werden.

2. Windkraftwerk nach Anspruch 1, **dadurch gekennzeichnet, dass** die Kurvenscheibe (04) mit dem drehenden Teil des Rotorlagers des WKW fest verbunden sind.

3. Windkraftwerk nach Anspruch 1, **dadurch gekennzeichnet, dass** das untere äußere Ende der Zylinder (07) als Passsitz zu den Bohrungen der Zylinderaufnahme (02) und darüber ein Außengewinde (11) passend zum Innengewinde der Zylinderaufnahme (02) ausgeführt ist und eine Sicherungsmutter (08) auf dem Außengewinde (11) die axiale und radiale Lage sichert.

4. Windkraftwerk nach Anspruch 1, **dadurch gekennzeichnet, dass** zylinderseitig vor den Anschlüssen des Zylinderkopfes (09) an den geschlossenen Kreislauf sowohl auf der Hochdruckals auch auf der Niederdruckseite je ein sperrbares Rückschlagventil angeordnet ist, wobei alle Ventile steuerungsseitig mit Stelleinheiten zur gezielten Sperrung durch eine Steuerung verbunden sind, so dass im Motor- und Pumpenbetrieb einzelne Zylinder/Kolbeneinheiten (01) zu- und abgeschaltet werden können.

5. Windkraftwerk nach Anspruch 1, **dadurch gekennzeichnet, dass** die Abschaltung einzelner Kolben/Zylindereinheiten (01) dadurch erfolgt, dass durch die Sperrung des jeweils niederdruckseitigen Anschlusses der betreffende Kolben von der Kurvenscheibe (04) einmalig in seinen hinteren Totpunkt verschoben wird und im weiteren Betrieb in dieser Position verbleibt.

6. Windkraftwerk nach Anspruch 1, **dadurch gekennzeichnet, dass** die Zylinderaufnahme (02) stirnseitig zum feststehenden Teil (03)des Rotorlagers, bzw. Rahmenelementes eine große Ringnut besitzt, in welche die Lagerelemente (10) und die Kurvenscheibe (04) gegenüberliegend hineinragen, die Ringnut und der Innenlaufkranz (06) seitlich abgedichtet sind und der freie Raum, einschließlich des Rotorlagerraumes, von zusätzlichem Spülöl zur Kühlung und Schmierung drucklos durchflossen ist.

7. Windkraftwerk nach Anspruch 1, **dadurch gekennzeichnet, dass** die Zylinderaufnahme (02) stirnseitig zum feststehenden Teil (03) im Bereich der Ringnut, an der Außenkante kreisringförmig zu einem Befestigungsflansch verbreitert ist, der mit dem feststehenden Teil (03) des Rotorlagers verbunden ist und der Innenlaufkranz (06) mit der Kurvenscheibe (04) lösbar verbunden ist.

8. Verfahren zur Steuerung eines Windkraftwerkes mit hydrostatischem Hauptantrieb mit verstellbarer hydraulischer Axialkolbenkraftmaschine nach Anspruch 1, **dadurch gekennzeichnet,**
**dass** zum Anlaufen des Rotors die Axialkolbenkraftmaschine durch Tauschen der Hoch- und Niederdruckseite des geschlossenen Kreislaufes als Hydromotor wirkt, in dem über eine Steuereinheit die sperrbaren Rückschlagventile (05) in den Verbindungen jeder Zylinder/Kolbeneinheit (01) zur Hochals auch zur Niederdruckseite umgesteuert werden,
und den Rotor bis auf eine zum weiteren selbständigen Hochlauf erforderliche Mindestdrehzahl bringt, wobei in dieser Betriebsweise die Anzahl der im Einsatz befindlichen Zylinder/Kolbeneinheiten (01) durch Ansteuerung der sperrbaren Rückschlagventile (05) veränderlich ist und die jeweilige Druckbeaufschlagung der Zylinder/Kolbeneinheiten (01) abhängig vom Drehwinkel so erfolgt, dass eine motorische Drehung in gewünschter Drehrichtung erfolgt.

9. Verfahren zur Steuerung nach Anspruch 8, **dadurch gekennzeichnet,**
**dass** bei gleichzeitiger Druckbeaufschlagung aller vorhandenen Kolben/Zylindereinheiten (01) mittels der Steuerung die Axialkolbenkraftmaschine in ihre nächste "Totstellung" läuft und darin, hydraulisch eingespannt, als Haltebremse für den Rotor solange wirkt, wie der Druck in den Kolben/Zylindereinheiten (01) aufrecht erhalten wird.

## Claims

1. Wind turbine (WKW) having a hydrostatic main drive with adjustable hydraulic axial piston power machine, composed of multiple cylinders (07) which are arranged statically in an annular configuration and which have pistons guided therein, wherein the pistons are supported via bearing elements on an annular cam disc (04) with stroke cams, a stroke of the pistons being effected by means of the rotation of said cam disc or a rotation of the cam disc (04) being effected by hydraulic pressurization of the pistons, wherein said cam disc is connected to a drive or output respectively, **characterized**
- **in that** multiple cylinder/piston units (01) are detachably fastened, as independent assemblies in each case, in corresponding bores of a circular-ring-shaped cylinder receptacle (02), and the cylinder receptacle (02) is fixedly connected to the static part (03) of a rotor bearing of the wind turbine or frame element,
- the respectively required power and the displacement volume is determined by the number of always identical cylinder/piston units (01), and a fine adaptation of the specific displacement volume to the characteristics of the rotor of the wind turbine and/or of the drive is realized through variation of the number of strokes and stroke height of the cam disc (04),
- for a given number of cylinder/piston units (01), a stepped adjustment of the specific displacement volume is realized in that individual cylinder/piston units can be activated and deactivated independently of one another by virtue of in each case one blockable check valve being arranged in the connections of each cylinder/piston unit (01) both to the high-pressure side and also to the low-pressure side of the closed circuit of the hydrostatic drive, which check valves furthermore together also ensure the motor operation of the axial piston power machine by being correspondingly actuated by means of a control unit.

2. Wind turbine according to Claim 1, **characterized in that** the cam disc (04) is fixedly connected to the rotating part of the rotor bearing of the wind turbine.

3. Wind turbine according to Claim 1, **characterized in that** the lower, outer end of the cylinders (07) are formed with an interference fit with respect to the bores of the cylinder receptacle (02) and, furthermore, an external thread (11) is formed so as to match the internal thread of the cylinder receptacle (02) and a lock nut (08) on the external thread (11) secures the axial and radial position.

4. Wind turbine according to Claim 1, **characterized in that**, upstream, on the cylinder side, of the connections of the cylinder head (09) to the closed circuit, both on the high-pressure side and on the low-pressure side, there is arranged in each case one blockable check valve, wherein all of the valves are connected, on the control side, to actuating units for targeted blocking by means of a controller, such that individual cylinder/piston units (01) can be activated and deactivated in motor and pump operation.

5. Wind turbine according to Claim 1, **characterized in that** the deactivation of individual piston/cylinder units (01) is realized **in that**, as a result of the blocking of the respectively low-pressure-side connection, the respective piston is displaced once into its rear dead centre by the cam disc (04) and remains in said position during further operation.

6. Wind turbine according to Claim 1, **characterized in that** the cylinder receptacle (02) has, on the face side facing the static part (03) of the rotor bearing, or frame element, a large annular groove into which the bearing elements (10) and the cam disc (04) project from opposite sides, the annular groove and the inner running ring (06) are sealed off laterally, and the free space including the rotor bearing chamber is traversed by an unpressurized flow of additional scavenging oil for cooling and lubrication.

7. Wind turbine according to Claim 1, **characterized in that** the cylinder receptacle (02), on the face side facing the static part (03) and in the region of the annular groove, is widened at the outer edge in circular-ring-shaped form to form a fastening flange which is connected to the static part (03) of the rotor bearing, and the inner running ring (06) is detachably connected to the cam disc (04).

8. Method for controlling a wind turbine having a hydrostatic main drive with adjustable hydraulic axial piston power machine according to Claim 1, **characterized**
**in that**, for the start-up of the rotor, by interchanging the high-pressure side and low-pressure side of the closed circuit, the axial piston power machine acts as a hydraulic motor by virtue of the blockable check valves (05) in the connections of each cylinder/piston unit (01) to the high-pressure side and also to the low-pressure side being reversed by means of a control unit,
and said axial piston power machine brings the rotor to a minimum rotational speed required for autonomous further run-up, wherein, in this operating mode, the number of cylinder/piston units (01) in use can be varied by actuation of the blockable check valves (05), and the respective pressurization of the cylinder/piston units (01) is performed as a function of the angle of rotation such that rotation in the desired direction of rotation takes place under motor action.

9. Control method according to Claim 8, **characterized in that**, by simultaneous pressurization of all of the provided piston/cylinder units (01) by means of the controller, the axial piston power machine runs into its next "dead position" and, hydraulically braced in said position, acts as a holding brake for the rotor for as long as the pressure in the piston/cylinder units (01) is maintained.

## Revendications

1. Eolienne (WKW) comportant un entraînement principal hydrostatique, avec une machine motrice à pistons axiaux, hydraulique et réglable, se composant de plusieurs cylindres (07) disposés fixement en forme d'anneau avec des pistons guidés dans ceux-ci, dans laquelle les pistons prennent appui par des éléments de palier sur un disque de came annulaire (04) présentant des cames de levage, dont la rotation entraîne une levée des pistons, ou bien où une poussée hydraulique sur les pistons entraîne une rotation du disque de came (04), dans laquelle celui-ci est relié à un entraînement d'entrée ou à un entraînement de sortie, **caractérisée en ce que**
- plusieurs unités cylindre/piston (01) sous forme de groupe autonome sont fixées de façon amovible dans des alésages correspondants d'un logement de cylindres (02) en forme d'anneau circulaire et le logement de cylindres (02) est solidaire de la partie stationnaire (03) d'un palier de rotor de la WKW ou d'un élément de châssis,
- la puissance respectivement nécessaire et le volume d'aspiration sont déterminés par le nombre des unités cylindre/piston toujours identiques (01) et une adaptation fine du volume d'aspiration spécifique aux propriétés du rotor de la WKW ou de l'entraînement est effectuée par la variation du nombre de levées et de la hauteur de levée du disque de came (04),
- pour un nombre donné d'unités de cylindre/piston (01), un réglage progressif du volume d'aspiration spécifique est réalisé en connectant ou en déconnectant certaines de celles-ci indépendamment les unes des autres, par le fait que, dans les raccordements de chaque unité de cylindre/piston (01) aussi bien pour le côté haute pression que pour le côté basse pression du circuit fermé de l'entraînement hydrostatique, sont respectivement disposés des clapets anti-retour pouvant être fermés, qui assurent ensemble le fonctionnement en moteur de la machine motrice à pistons axiaux **en ce qu'**ils sont commandés de façon correspondante par une unité de commande .

2. Eolienne selon la revendication 1, **caractérisée en ce que** le disque de came (04) est solidaire de la partie tournante du palier de rotor de la WKW.

3. Eolienne selon la revendication 1, **caractérisée en ce que** l'extrémité extérieure inférieure des cylindres (07) est réalisée comme ajustement serré pour les alésages du logement de cylindres (02) et en plus comme filetage extérieur (11) s'ajustant au filetage intérieur du logement de cylindres (02) et un écrou de blocage (08) sur le filetage extérieur (11) bloque la position axiale et radiale.

4. Eolienne selon la revendication 1, **caractérisée en ce qu'**un clapet anti-retour pouvant être fermé est respectivement disposé du côté du cylindre avant les raccords de la tête de cylindre (07) au circuit fermé aussi bien sur le côté haute pression que sur le côté basse pression, dans laquelle toutes les soupapes sont reliées du côté de la commande avec des unités de réglage pour un blocage ciblé au moyen d'une commande, de telle manière que des unités cylindre/piston individuelles (01) puissent, en fonctionnement en moteur et en pompe, être connectées et déconnectées.

5. Eolienne selon la revendication 1, **caractérisée en ce que** la déconnexion de certaines unités de cylindre/piston (01) est effectuée **en ce que**, par le blocage du raccord respectif du côté basse pression, le piston concerné est déplacé par le disque de came (04) une fois jusqu'à son point mort arrière et reste dans cette position pendant le fonctionnement ultérieur.

6. Eolienne selon la revendication 1, **caractérisée en ce que** le logement de cylindres (02) présente du côté frontal vers la partie stationnaire (03) du palier de rotor ou de l'élément de châssis, une grande rainure annulaire, dans laquelle les éléments de palier (10) et le disque de came (04) pénètrent les uns en face de l'autre, la rainure annulaire et la couronne de roulement intérieure (06) sont étanches latéralement et l'espace libre, y compris la chambre du palier de rotor, est parcouru par de l'huile de balayage supplémentaire pour le refroidissement et la lubrification sans pression.

7. Eolienne selon la revendication 1, **caractérisée en ce que** le logement de cylindres (02), du côté frontal vers la partie stationnaire (03) dans la région de la rainure annulaire, est élargi sur l'arête extérieure en forme d'anneau circulaire en une bride de fixation, qui est assemblée à la partie stationnaire (03) du palier de rotor et la couronne de roulement intérieure (06) est assemblée de façon amovible au disque de came (04).

8. Procédé de commande d'une éolienne comportant un entraînement principal hydrostatique avec une machine motrice à pistons axiaux, hydraulique et réglable, selon la revendication 1, **caractérisé en ce que**, pour le démarrage du rotor, la machine motrice à pistons axiaux agit comme moteur hydraulique par échange des côtés haute pression et basse pression du circuit fermé, par le fait que les clapets anti-retour pouvant être fermés (05) dans les raccordements de chaque unité de cylindre/piston (01) sont inversés, par une unité de commande, vers le côté haute pression et aussi vers le côté basse pression, et amène le rotor jusqu'à une vitesse de rotation minimale nécessaire pour l'accélération automatique ultérieure, dans lequel, dans ce mode de fonctionnement, le nombre des unités de cylindre/piston (01) se trouvant en service est variable par commande des clapets anti-retour pouvant être fermés (05) et la poussée de pression respective sur les unités de cylindre/piston (01) est effectuée en fonction de l'angle de rotation, de telle manière qu'une rotation motorisée se produise dans le sens de rotation désiré.

9. Procédé de commande selon la revendication 8, **caractérisé en ce que**, lors d'une poussée de pression simultanée sur toutes les unités de cylindre/piston présentes (01), la machine motrice à pistons axiaux tourne jusqu'à sa prochaine "position morte" au moyen de la commande et agit dans celle-ci, sous serrage hydraulique, comme frein de retenue pour le rotor jusqu'à ce que la pression dans les unités de cylindre/piston (01) soit maintenue.
